# EUROPÄISCHE PATENTSCHRIFT

(11) **EP 1 436 531 B1**
(45) Veröffentlichungstag und Bekanntmachung des Hinweises auf die Patenterteilung: **20.04.2005**
(21) Anmeldenummer: 02781257.7
(22) Anmeldetag: 16.10.2002
(51) Int. Cl.: F16H 61/02

(54) **VERFAHREN ZUR AUSLÖSUNG EINER HOCHSCHALTUNG BEI KICK-DOWN**
METHOD FOR TRIGGERING AN UPSHIFT DURING KICK-DOWN CONDITIONS
PROCEDE POUR DECLENCHER UN PASSAGE AU RAPPORT SUPERIEUR EN CAS DE RETROGRADATION FORCEE

(30) Priorität: 20.10.2001 DE 10151909
(43) Veröffentlichungstag der Anmeldung: 14.07.2004
(73) Patentinhaber: ZF FRIEDRICHSHAFEN Aktiengesellschaft, 88038 Friedrichshafen (DE)
(72) Erfinder: DÖBELE, Bernd, 88682 Salem (DE)
(86) Internationale Anmeldenummer: PCT/EP2002/011537
(87) Internationale Veröffentlichungsnummer: WO 2003/036136

(56) Entgegenhaltungen:
- DE-A- 2 709 235
- DE-A- 19 961 979
- US-A- 5 157 991

## Beschreibung

Die Erfindung betrifft ein Verfahren zur Steuerung eines von einem Antriebsmotor antreibbaren, selbsttätig schaltenden Stufenwechselgetriebes mit mehreren Gangstufen in einem Kraftfahrzeug nach dem Oberbegriff des Hauptanspruchs und wie z.B. aus der DE 2 709 235 bekannt.

Die Mehrzahl der Fahrzeuge mit automatisch schaltenden Stufenwechselgetrieben, unter Last schaltbaren Automatgetrieben oder automatisierten Schaltgetrieben sind mit einem sogenannten Kick-down-Schalter ausgerüstet. Die Betätigung des Kick-down-Schalters wird in der Regel so interpretiert, dass die maximale Zugkraft angefordert wird. Sofern, ausgehend von dem Fahrzustand, in dem der Kick-down-Schalter betätigt wird, aufgrund der zu erwartenden Drehzahlen eine Rückschaltung zulässig ist, wird diese ausgeführt.

Zur Betätigung des Kick-down-Schalters ist vom Fahrer bei annähernd voll durchgetretenem Fahrpedal in der Regel noch ein Widerstand zu überwinden, so dass der Fahrer über die Betätigungskraft eine Rückmeldung darüber erhält, dass ein weiteres Durchtreten des Fahrpedals dann zur Auslösung des Kick-down-Fahrprogramms führen wird.

Gegenüber Fahrzeugen ohne Kick-down-Schalter kann der jeweilige Fahrzustand wesentlich zuverlässiger differenziert werden und Rückschaltungen können gezielt vom Fahrer nur durch entsprechende Betätigung des Fahrpedals ausgelöst oder unterdrückt werden.

Bei schweren Nutzfahrzeugen ist es insbesondere im Bereich der zulässigen Höchstgeschwindigkeit der Landstraße von 60 km/h praktisch unmöglich, ein Schaltprogramm "optimal" auszulegen. Die Anforderungen nach minimalem Kraftstoffverbrauch und ausreichendem Zugkraftüberschuß für Beschleunigungen und/oder leichte Steigungsstrecken stehen sich unvereinbar gegenüber, wenn gleichzeitig eine zu hohe Schalthäufigkeit bzw. Schaltpendeln vermieden werden soll. Ist nämlich das Schaltprogramm für minimalen Kraftstoffverbrauch ausgelegt, wird bereits früh in die nächsthöhere bzw. höchste Gangstufe geschaltet. Bedingt durch die abgesenkte Drehzahl ist in diesem Gang dann nur wenig Zugkraftüberschuß vorhanden, so dass bereits bei einer geringen Beschleunigungsanforderung wieder eine Rückschaltung nötig wird.

In der Praxis ist daher oft ein Bedienelement vorgesehen, das dem Fahrer einen manuellen Eingriff erlaubt, so dass er einen Gangwechsel unterdrücken oder gezielt bewirken kann. Nachteilig hierbei ist, daß der vollautomatische Betriebsmodus nicht alle Fahrsituationen befriedigend abdeckt.

Der Erfindung liegt daher die Aufgabe zugrunde, ein Verfahren zur Steuerung eines selbsttätig schaltenden Stufenwechselgetriebes anzugeben, welches einem Fahrer insbesondere bei Fahrsituationen auf einer im wesentlichen ebenen Landstraße erlaubt, gezielt auf die eingelegte Gangstufe Einfluß zu nehmen, ohne den automatischen Betriebsmodus verlassen zu müssen.

Diese Aufgabe wird durch ein, auch die Merkmale des kennzeichnenden Teils des Hauptanspruchs aufweisendes Verfahren gelöst.

Vorteilhafte Ausgestaltungen des Verfahrens sind durch die Unteransprüche gegeben.

Die Erfindung macht sich die Erkenntnis zunutze, dass der Kick-down-Schalter üblicherweise oberhalb einer bestimmten Drehzahl ohne Funktion ist.

Bei dem erfindungsgemäßen Verfahren sind bei Lastvorgaben am Fahrpedal zwischen 0 und 100 % und ohne Betätigung des Kick-down-Schalters die Schaltdrehzahlen so weit nach oben verschoben, dass beispielsweise mindestens 90 % der Nenndrehzahl des Antriebsmotors erreicht werden, bevor eine Schaltung ausgelöst wird. In diesem Betriebszustand ist ausreichend Zugkraftüberschuß vorhanden, so dass beschleunigt werden kann oder auch Steigungen bis zu einem bestimmten Grad überwunden werden können. Ist die Drehzahl bzw. Geschwindigkeit so hoch, dass eine Rückschaltung infolge einer Betätigung des Kick-down-Schalters aufgrund der zu erwartenden hohen Motordrehzahlen nicht ausgeführt wird, wird dem Kick-down-Schalter eine andere Funktion, nämlich die Auslösung einer Hochschaltung in die nächste Gangstufe, zugeordnet. Entscheidet der Fahrer nun aufgrund der Fahrsituation, dass eine Hochschaltung in die nächsthöhere Gangstufe erfolgen soll, so betätigt er einfach kurz den Kick-down-Schalter und die Schaltung wird ausgelöst.

Wenn, ausgehend von dem aktuellen Fahrzustand, eine Rückschaltung zulässig ist, also keine Gefahr von unzulässig hohen Drehzahlen des Antriebsmotors besteht, ist dem Kick-down-Schalter seine normale Funktion zugeordnet.

Im einfachsten Fall grenzen die Drehzahlbereiche, in denen eine Rückschaltung bzw. Hochschaltung infolge der Betätigung des Kick-down-Schalters ausgelöst wird, unmittelbar aneinander. Eine größere Sicherheit gegenüber ungewollten Hoch- bzw. Rückschaltungen wird dadurch erzielt, dass die erste Grenzdrehzahl, unterhalb der infolge einer Betätigung des Kick-down-Schalters eine Rückschaltung ausgelöst wird, unterhalb der zweiten Grenzdrehzahl liegt, welche den Drehzahlbereich nach unten begrenzt, innerhalb dessen durch Betätigung des Kick-down-Schalters eine Hochschaltung ausgelöst wird.

Vorteilhafterweise ist eine optische und/oder akustische Anzeige vorgesehen, die dem Fahrer anzeigt, ob die zweite Grenzdrehzahl über- oder unterschritten ist.

Wenn der Kick-down-Schalter zum Zweck einer Hochschaltung vom Fahrer betätigt wird, sollen in der Regel ja keine hohen Beschleunigungswerte aufgebaut werden, indem kurzzeitig Vollast gegeben wird. Deshalb ist bei einer vorteilhaften Ausgestaltung der Erfindung eine Hochschaltung infolge der Betätigung des Kick-down-Schalters nur ausgehend von der zweit- und dritthöchsten Gangstufe vorgesehen. Bei allen anderen Gangstufen ist diese Funktion inaktiv.

Vorteilhafterweise erfolgt die Auslösung einer Hochschaltung dann, wenn das Signal des Kick-down-Schalters eine Rampe aufweist, welche auftritt, wenn der Schalter von einem Zustand, in dem er nicht betätigt ist, in einen Zustand, in dem er betätigt ist, wechselt.

Die Erfindung wird anhand der beiliegenden Figuren näher erläutert, wobei
- Fig. 1: ein Programm-Ablaufdiagramm,
- Fig. 2: einen Drehzahlmesser mit einer optischen Anzeige und
- Fig. 3: einen Ausschnitt aus einem erfindungsgemäßen Schaltprogramm
zeigen.

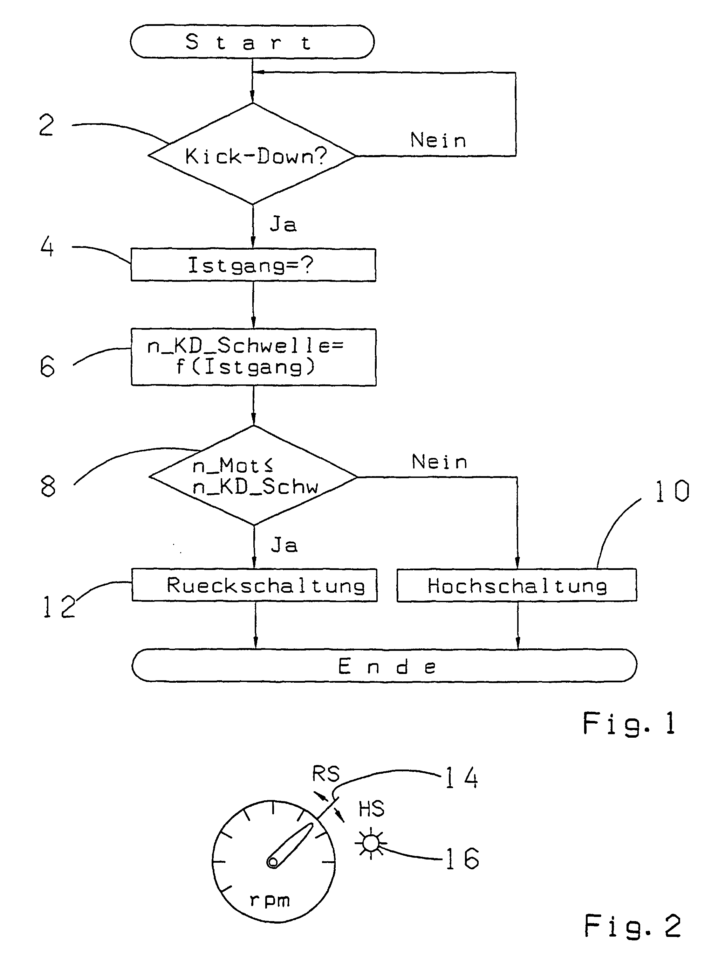

Der in Fig. 1 gezeigte Programm-Ablauf wird während des Betriebs des Fahrzeugs sich ständig wiederholend durchlaufen. In Block 2 wird geprüft, ob der Kick-down-Schalter ein Kick-down-Signal ausgibt.

Ein entsprechendes Programm ist in einer elektronischen Getriebesteuerung abgelegt.

Wird in Block 2 festgestellt, dass eine Kick-down-Anforderung anliegt, wird in Block 4 die eingelegte Gangstufe ermittelt. Die Grenzdrehzahl, oberhalb welcher infolge der Betätigung des Kick-down-Schalters eine Hochschaltung ausgelöst wird, wird in Block 6, abhängig von der eingelegten Gangstufe, ermittelt. In Block 8 wird ermittelt, ob die aktuelle Motordrehzahl n_Mot kleiner oder gleich der festgelegten zweiten Grenzdrehzahl n_KD_Schw ist. Ist dies nicht der Fall, ist die zweite Grenzdrehzahl also überschritten, erfolgt in Block 10 eine Hochschaltung. In dem in Fig. 1 dargestellten Beispiel ist die erste Grenzdrehzahl, unterhalb der infolge der Betätigung des Kick-down-Schalters eine Rückschaltung ausgelöst wird, gleich der zweiten Grenzdrehzahl. Wird daher in Block 8 festgestellt, dass die Motordrehzahl kleiner ist als die zweite Grenzdrehzahl, erfolgt in Block 12 eine Rückschaltung.

In Fig. 2 ist mit 14 auf einem Drehzahlmesser die zweite Grenzdrehzahl bezeichnet, oberhalb welcher infolge der Betätigung des Kick-down-Schalters eine Hochschaltung HS und unterhalb welcher infolge der Betätigung des Kick-down-Schalters eine Rückschaltung RS erfolgt. Die Anzeigenleuchte 16 leuchtet auf, wenn die zweite Grenzdrehzahl überschritten ist, so dass der Fahrer auf einen Blick erkennen kann, was passieren wird, wenn er den Kick-down-Schalter betätigt.

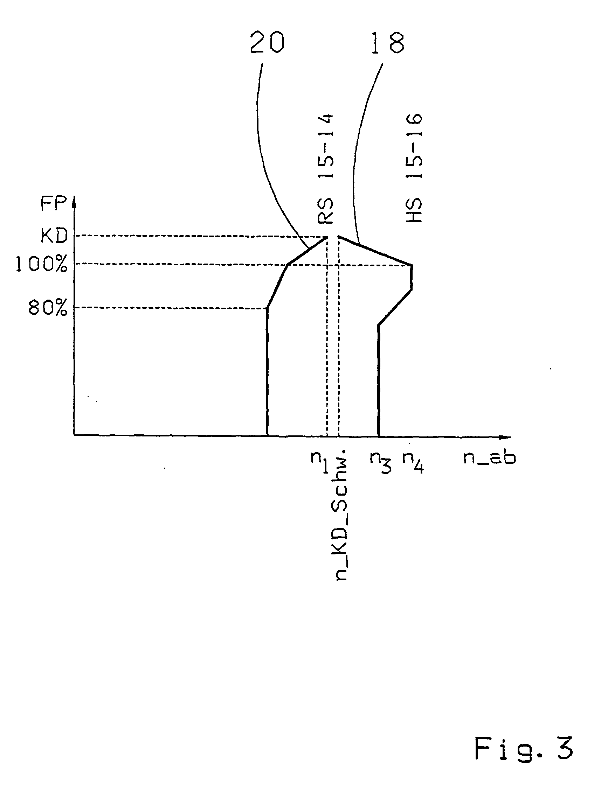

Fig. 3 zeigt einen Ausschnitt eines Schaltprogramms, bei dem eine Hochschalt-Kennlinie für die Schaltung von der 15. zur 16. Gangstufe HS 15-16 und eine Rückschalt-Kennlinie für die Schaltung von der 15. zur 14. Gangstufe RS 15-14 eingezeichnet ist. Dabei sind Fahrpedalstellungen entsprechend Lastvorgaben von 0 bis 100 % sowie die Fahrpedalstellung bei betätigtem Kick-down-Schalter über der Abtriebsdrehzahl des Getriebes n_ab aufgetragen. Mit n₁ ist die erste Grenzdrehzahl bezeichnet, unterhalb welcher eine Betätigung des Kick-down-Schalters eine Rückschaltung auslöst. Die zweite Grenzdrehzahl n_KD_Schw liegt etwas oberhalb der ersten Grenzdrehzahl n₁, so dass eine unbeabsichtigte Schaltung weitgehend ausgeschlossen werden kann. Bei Getriebeabtriebsdrehzahlen, welche zwischen der zweiten Grenzdrehzahl n_KD_Schw und der Drehzahl n₃ liegen, erfolgt keine Hochschaltung in den 16. Gang, sofern nicht der Kick-down-Schalter betätigt wird. Die Schaltkennlinie für die Hochschaltung von dem 15. in den 16. Gang HS 15-16 hat bei hohen Lastvorgaben am Fahrpedal einen hohen Drehzahlwert n₄, der bei dem Antriebsmotor seine Nenndrehzahl erreicht. Die Hochschalt-Kenn-linie HS 15-16 entspricht also einer dritten Grenzdrehzahl, oberhalb derer eine Hochschaltung in die nächsthöhere Gangstufe erfolgt, wobei die Werte dieser Hochschalt-Kenn-linie, abhängig von der Lastvorgabe, ermittelt werden. Die Drehzahl n₃ ist dabei so gewählt, dass etwa 90 % der Nenndrehzahl des Antriebsmotors erreicht werden, bevor eine Hochschaltung in den 16. Gang erfolgt. Wird nun durch Betätigung des Kick-down-Schalters der mit 18 bezeichnete Abschnitt der Hochschalt-Kennlinie HS 15-16 überschritten, so erfolgt eine Hochschaltung in den 16. Gang, während infolge der Überschreitung des mit 20 bezeichneten Abschnitts der Rückschalt-Kennlinie RS 15-14 eine Rückschaltung in den 14. Gang erfolgt.

### Bezugszeichen

- 2 - 12: Programm-Block
- 14: Grenzdrehzahl
- 16: Leuchte
- 18: Abschnitt
- 20: Abschnitt

## Patentansprüche

1. Verfahren zur Steuerung eines von einem Antriebsmotor antreibbaren, selbsttätig schaltenden Stufenwechselgetriebes mit mehreren Gangstufen in einem Kraftfahrzeug, bei welchem Lastvorgaben eines Fahrers durch ein Fahrpedal aufgenommen werden und, abhängig von einer Fahrpedalstellung und einer Motor- oder Getriebedrehzahl, Hoch- oder Rückschaltungen zwischen den Gangstufen automatisch ausgelöst werden, wobei ein Kick-down-Schalter vorhanden ist, der bei voll durchgetretenem Fahrpedal betätigt wird, und wobei in einem ersten Drehzahlbereich unterhalb einer ersten Grenzdrehzahl (n₁) von Motor oder Getriebe infolge einer Betätigung des Kick-down-Schalters eine Rückschaltung ausgelöst wird, **dadurch gekennzeichnet, dass** insbesondere für eine oder mehrere obere Gangstufen in einem zweiten Drehzahlbereich oberhalb einer zweiten Grenzdrehzahl (n_KD_Schw) auch durch hohe Lastvorgaben keine Rückschaltung und eine Hochschaltung nur durch Betätigung des Kick-down-Schalters ausgelöst wird.

2. Verfahren nach Anspruch 1, **dadurch gekennzeichnet, dass** der erste und der zweite Drehzahlbereich unmittelbar aneinander angrenzen.

3. Verfahren nach Anspruch 1 oder 2, **dadurch gekennzeichnet, dass** der zweite Drehzahlbereich nach oben begrenzt ist durch eine dritte Grenzdrehzahl (HS 15-16), oberhalb derer eine Hochschaltung in die nächsthöhere Gangstufe erfolgt.

4. Verfahren nach Anspruch 3, **dadurch gekennzeichnet, dass** die Werte der dritten Grenzdrehzahl (HS 15-16) abhängig von der Lastvorgabe ermittelt werden.

5. Verfahren nach Anspruch 3 oder 4, **dadurch gekennzeichnet, dass** die Werte der dritten Grenzdrehzahl (HS 15-16) so hoch vorgegeben sind, dass bei Überschreiten der Grenzdrehzahl mindestens etwa 90 % der Nenndrehzahl des Antriebsmotors erreicht werden.

6. Verfahren nach einem der Ansprüche 1 bis 5, **dadurch gekennzeichnet, dass** eine Betätigung des Kick-down-Schalters nur, ausgehend von der zweit- und dritthöchsten Gangstufe, eine Hochschaltung auslöst.

7. Verfahren nach einem der Ansprüche 1 bis 6, **dadurch gekennzeichnet, dass** eine optische oder akustische Anzeige (16) vorgesehen ist, die dem Fahrer anzeigt, ob die zweite Grenzdrehzahl (n_KD_Schw) über- oder unterschritten ist.

8. Verfahren nach einem der Ansprüche 1 bis 7, **dadurch gekennzeichnet, dass** die Schaltungsauslösung infolge einer Rampe eines vom Kick-down-Schalter erzeugten Signals erfolgt, welche auftritt, wenn der Schalter von einem Zustand, in dem er nicht betätigt ist, in einen Zustand, in dem er betätigt ist, wechselt.

## Claims

1. The invention relates to a method for controlling an automatic, multistep variable-speed transmission installed in a vehicle and driven by a driving motor, with the driver's load demands being picked up by means of a gas pedal and - dependent on gas-pedal position and engine or transmission speed - upshifts or downshifts between the gear steps being automatically triggered, with a kickdown switch being provided, which is activated by the fully depressed gas pedal, and with a downshift being triggered through activation of the kickdown switch within a first speed range below a first limit speed (n1) of the engine or transmission, **characterized in that** especially with regard to one ore several higher gear steps and within a second speed range above a second limit speed (n_KD_Schw), a downshift will not even be triggered by high load demands and an upshift only through activation of the kickdown switch.

2. A method according to claim 1, **characterized in that** the first and the second speed range directly adjoin each other.

3. A method according to claim 1 or 2, **characterized in that** the second speed range is limited at its upper end by a third limit speed (HS 15-16), above which an upshift to the next-higher gear will be performed.

4. A method according to claim 3, **characterized in that** the values of the third limit speed (HS 15-16) are determined in relation to the load demand.

5. A method according to claim 3 or 4, **characterized in that** the values of the third limit speed (HS 15-16) are preset at such a high level that when the speed limit is exceeded, at least about 90% of the rated speed of the drive motor is attained.

6. A method according to one of the claims 1 through 5, **characterized in that** in the second- and third-highest gear step, activation of the kickdown switch will trigger only one upshift.

7. A method according to one of the claims 1 through 6, **characterized in that** either an optical or acoustic indicator (16) is provided, which informs the driver when the speed exceeds or falls below the second limit speed (n_KD_Schw).

8. A method according to one of the claims 1 through 7, **characterized in that** triggering of a gearshift is performed as a result of a ramp of a signal produced by the kickdown switch, which occurs when the switch changes from a non-activated to an activated state.

## Revendications

1. Méthode de contrôle d'une transmission à variation discontinue de la vitesse d'un véhicule automobile, actionnable par un moteur d'entraînement, à changement de vitesses indépendant et dotée de plusieurs rapports, sachant que les consignes de charge du conducteur sont transmises à la pédale d'accélérateur, sachant qu'en fonction de l'enfoncement de la pédale d'accélérateur et du régime moteur ou du régime de la boîte de vitesses, les passages montants et descendants entre les différents rapports sont déclenchés automatiquement, sachant qu'est prévu un contacteur kick-down, qui est actionné lorsque la pédale d'accélérateur est complètement enfoncée, et sachant que dans une première plage de régime au-dessous d'un premier régime seuil (n1) du moteur ou de la boîte de vitesses est déclenché un passage descendant par l'actionnement du contacteur kick-down, **caractérisée en ce qu'**en particulier pour un ou plusieurs rapports supérieurs dans une deuxième plage de régime au-dessus d'un deuxième régime seuil (n_KD_Schw) - même en présence d'une consigne de charge élevée - n'est déclenché aucun passage descendant, et **en ce qu'**un passage montant n'est déclenché que par l'actionnement du contacteur kick-down.

2. Méthode selon la revendication 1, **caractérisée en ce que** la première et la deuxième plage de régime sont immédiatement adjacentes.

3. Méthode selon la revendication 1 ou 2, **caractérisée en ce que** la deuxième plage de régime est limitée vers le haut par un troisième régime seuil (HS 15-16), au-dessus duquel s'effectue le passage montant au rapport immédiatement supérieur.

4. Méthode selon la revendication 3, **caractérisée en ce que** les valeurs du troisième régime seuil (HS 15-16) sont déterminées en fonction de la consigne de charge.

5. Méthode selon la revendication 3 ou 4, **caractérisée en ce que** les valeurs de consigne du troisième régime seuil (HS 15-16) sont tellement élevés qu'en dépassant le régime seuil sont atteints au moins 90% du régime nominal du moteur d'entraînement.

6. Méthode selon une des revendications 1 à 5, **caractérisée en ce que** l'actionnement du contacteur kick-down ne déclenche un passage montant qu'à partir du deuxième ou troisième rapport supérieur.

7. Méthode selon une des revendications 1 à 6, **caractérisée en ce qu'**est prévue un affichage optique ou acoustique (16), indiquant au conducteur si le deuxième régime seuil (n_KD_Schw) a été dépassé ou s'il n'a été atteint.

8. Méthode selon une des revendications 1 à 7, **caractérisée en ce que** le déclenchement du changement de vitesses s'effectue suite à une rampe d'un signal généré par le contacteur kick-down, laquelle est produite lorsque le contacteur change d'un état dans lequel il n'est pas actionné à un état dans lequel il est actionné.
